# EUROPÄISCHE PATENTSCHRIFT

(11) **EP 2 505 493 B1**
(45) Veröffentlichungstag und Bekanntmachung des Hinweises auf die Patenterteilung: **27.04.2016**
(21) Anmeldenummer: 12160666.9
(22) Anmeldetag: 22.03.2012
(51) Int. Cl.: B64C 9/22, B64C 9/24

(54) **Adaptiver Vorflügel**
Adaptive slat
Volet avant adaptatif

(30) Priorität: 28.03.2011 DE 102011001582; 30.03.2011 DE 102011001654
(43) Veröffentlichungstag der Anmeldung: 03.10.2012
(73) Patentinhaber: Deutsches Zentrum für Luft- und Raumfahrt e.V., 51147 Köln (DE)
(72) Erfinder: Kintscher, Markus, 38114 Braunschweig (DE); Geier, Sebastian, 38114 Braunschweig (DE); Heintze, Dr. Olaf, 38162 Cremlingen (DE); Rudenko, Anton, 38102 Braunschweig (DE)
(74) Vertreter: REHBERG HÜPPE + PARTNER

(56) Entgegenhaltungen:
- EP-A1- 1 488 998
- WO-A2-2010/040501
- US-A- 4 200 253
- US-A- 6 015 115

## Beschreibung

### TECHNISCHES GEBIET DER ERFINDUNG

Die Erfindung bezieht sich auf einen Vorflügel zur ausfahrbaren Lagerung an einer Vorderkante eines Flügels, der die Merkmale des Oberbegriffs des unabhängigen Patentanspruchs aufweist. Der Begriff Flügel schließt hierbei neben fest montierten Flügeln auch beweglich gelagerte Flügel bis hin zu Rotorblättern ein.

Weiterhin bezieht sich die vorliegende Erfindung auf einen Tragflügel für ein Flugzeug, insbesondere ein Verkehrsflugzeug, mit mindestens einem solchen Vorflügel sowie auf ein Flugzeug mit einem Paar solcher Tragflügel.

### STAND DER TECHNIK

Vorflügel zählen zu den Hochauftriebskomponenten an einem Tragflügel, die zur Ermöglichung eines langsamen Flugs eines Flugzeugs beim Start und bei der Landung notwendig sind. Neben Vorflügeln zählen Landeklappen zu den üblichen Hochauftriebskomponenten. Beim Ausfahren eines Vorflügels von der Vorderkante eines Tragflügels resultiert aus der Krümmungserhöhung des Gesamtprofils eine vergrößerte Zirkulation und damit ein erhöhter Auftrieb. Eine weitere Erhöhung der Zirkulation und des Auftriebs geht mit einem zwischen dem ausgefahrenen Vorflügel und dem Tragflügel verbleibenden Spalt einher, der zudem zu einer Beschleunigung der Strömung an der Flügeloberseite führt und damit das Ablösen der Strömung verhindert. Der Spalt erhöht jedoch auch den Strömungswiderstand des Tragflügels und ist zudem mit einer erheblichen Lärmemission verbunden, die gerade beim Langsamflug in Bodennähe unerwünscht ist.

Es ist daher von Interesse, den Spalt zwischen dem Vorflügel und dem Tragflügel eines Flugzeugs bedarfsweise zu schließen und zu öffnen, um entweder den geringeren Strömungswiderstand mit dem entsprechend geringeren Treibstoffverbrauch sowie der geringeren Lärmentwicklung oder den höheren Auftrieb zu nutzen.

Aus der WO 2008/058695 A1 ist es bekannt, einen Vorflügel um seine Haupterstreckungsrichtung zu verschwenken, um zum Schließen eines Spalts zwischen der Hinterkante des Vorflügels und einer Vorderkante eines Tragflügels die Hinterkante des Vorflügels an die Vorderkante des Tragflügels heranzuschwenken. Als Alternative zum Verschwenken des gesamten Vorflügels wird beschrieben, nur eine gegenüber einem Hauptkörper des Vorflügels verschwenkbare und die Hinterkante des Vorflügels umfassende Klappe an die Vorderkante des Tragflügels heranzuschwenken. Die Ausführung der Klappe wird jedoch nicht im Einzelnen beschrieben.

Die WO 2010/040501 A2, welche als nächstliegender Stand der Technik angesehen wird und alle Merkmale des Oberbegriffes des Anspruchs 1 aufweist, offenbart Einzelheiten eines solchen Vorflügels mit gegenüber einem Hauptkörper verschwenkbarer Hinterkante. Danach ist ein biegeelastisches Element an der Oberseite des Vorflügels vorgesehen, um das die Hinterkante verschwenkbar ist, wobei an der dem biegeelastischen Element gegenüber liegenden Unterseite des Vorflügels ein translatorisch-elastisches Element vorgesehen ist, das heißt, ein Element, das in Richtung parallel zur Unterseite des Vorflügels unter Erzeugung einer elastischen Kraft oder Federkraft in seiner Länge veränderbar ist. Dem translatorisch-elastischen Element ist ein Linearaktuator parallel geschaltet, um die zum Verschwenken der Hinterkante um das biegeelastische Element benötigte Kraft und eine gewünschte Anlagekraft der Hinterkante an der Vorderkante des Tragflügels aufzubringen. Um die erwünschte Schwenkbewegung der Hinterkante des Vorflügels zu ermöglichen, muss das translatorisch-elastische Element eine ganz erhebliche Längenänderung vollziehen und entsprechend weichelastisch sein. Gleichzeitig ist das translatorisch-elastische Element bei diesem Aufbau des Vorflügels gegenüber der Umströmung des Vorflügels bei geöffnetem Spalt zum Tragflügel exponiert und stellt so eine offensichtliche Schwachstelle des bekannten Vorflügels dar.

### AUFGABE DER ERFINDUNG

Der Erfindung liegt die Aufgabe zugrunde, einen Vorflügel zur ausfahrbaren Lagerung an einer Vorderkante eines Flügels, insbesondere eines Tragflügels eines Flugzeugs, aufzuzeigen, der trotz der Abwinkelbarkeit seiner Hinterkante, um einen Spalt zu dem Flügel hin bedarfsweise zu öffnen und zu schließen, keine strukturelle Schwachstelle aufweist.

### LÖSUNG

Die Aufgabe der Erfindung wird durch einen Vorflügel mit den Merkmalen des unabhängigen Patentanspruchs 1 gelöst. Bevorzugte Ausführungsformen des neuen Vorflügels sind in den abhängigen Patentansprüchen 2 bis 13 definiert. Der nebengeordnete Patentanspruch 14 ist auf einen Tragflügel für ein Flugzeug mit mindestens einem Vorflügel nach einem der vorhergehenden Ansprüche gerichtet, der nebengeordnete Patentanspruch 15 auf ein Flugzeug mit einem Paar solcher Tragflügel.

### BESCHREIBUNG DER ERFINDUNG

Bei einem erfindungsgemäßen Vorflügel zur ausfahrbaren Lagerung an einer Vorderkante eines Flügels, mit einem eine Profilnase ausbildenden formstabilen Vorderkörper und einem spaltfrei an den Vorderkörper anschließenden Hinterkörper, der eine an die Vorderkante des Tragflügels angepasste konkave Wölbung an der Unterseite des Vorflügels und eine Hinterkante des Vorflügels umfasst und der um eine Haupterstreckungsrichtung des Vorflügels verformbar ist, um die Hinterkante ohne Öffnung eines Spalts in dem Vorflügel um die Haupterstreckungsrichtung des Vorflügels gegenüber dem Vorderkörper abzuwinkeln, weist der Hinterkörper eine um die Haupterstreckungsrichtung des Vorflügels biegsame Außenhaut auf, die an den Vorderkörper anschließt und sich von dort auf der Oberseite und der Unterseite des Vorflügels bis zu der Hinterkante erstreckt, wobei sie auf der Unterseite des Vorflügels die konkave Wölbung aufweist.

Bei dem neuen Vorflügel ist nicht nur lokal ein biegsames Element auf einer Seite des Vorflügels vorgesehen, sondern der gesamte Hinterkörper bis zur Hinterkante des Vorflügels und einschließlich der konkaven Wölbung an der Unterseite des Vorflügels ist aus einer biegsamen Außenhaut ausgebildet. Diese biegsame Außenhaut wird zum Abwinkeln oder Verschwenken der Hinterkante des Vorflügels insgesamt verbogen, wobei es für die strukturelle Integrität des Vorflügels vorteilhaft ist, wenn diese Verbiegung mit keiner nennenswerten Dehnung der Außenhaut einhergeht und diese entsprechend zug- und drucksteif ausgebildet sein kann. Ermöglicht wird dies durch die Ausdehnung der biegsamen Außenhaut über konkave Wölbung an der Unterseite des Vorflügels. Durch Veränderung des Krümmungsradius der Wölbung kann die effektive Erstreckung der Außenhaut zwischen dem Vorderkörper und der Hinterkante an der Unterseite des Vorflügels verkürzt und so ein Abschwenken der Hinterkante eingeleitet werden.

Konkret kann eine Betätigungseinrichtung zum Abwinkeln der Hinterkante im Bereich der konkaven Wölbung an der Außenhaut angreifen und diese gegenüber dem Vorderkörper beaufschlagen. Das heißt, die Betätigungseinrichtung stützt sich an dem formstabilen Vorderkörper des Vorflügels ab.

Die Betätigungseinrichtung kann so ausgebildet sein, dass sie nur in einer Richtung aktivierbar ist, in der sie die Außenhaut gegen eine elastische Rückstellkraft zu dem Vorderkörper hin beaufschlagt. Durch Rücknahme der Beaufschlagung erfolgt dann eine Rückverformung des Vorflügels. Die elastische Rückstellkraft kann von einer Biegeelastizität der Außenhaut bereitgestellt werden. Grundsätzlich ist es aber auch möglich, hierfür zusätzliche elastische Elemente, wie beispielsweise Rückstellfedern, vorzusehen.

Um auch bei punktuellem Angriff der Betätigungseinrichtung an der Außenhaut diese über die gesamte Erstreckung des Vorflügels in seiner Haupterstreckungsrichtung gleichmäßig zu verformen, kann die Außenhaut im Bereich des Angriffs der Betätigungseinrichtung längs der Haupterstreckungsrichtung des Vorflügels versteift sein.

Als wirksame Gegenmaßnahme gegen eine Verwerfung der Hinterkante des Vorflügels durch aerodynamische Lasten erweist es sich auch, wenn eine Linearführung gegenüber dem Vorderkörper für den Bereich des Angriffs der Betätigungseinrichtung an der biegsamen Außenhaut vorgesehen ist. Das heißt, der Bereich des Angriffs der Betätigungseinrichtung kann sich trotz der Biegsamkeit der Außenhaut des Vorflügels nur in Richtung der Linearführung gegenüber dem formstabilen Vorderkörper bewegen, und dies auch nur dann, wenn es von der Betätigungseinrichtung zugelassen oder erzwungen wird. Deformationen des Vorflügels durch aerodynamische Kräfte, die zu einer anderen Verlagerung des Bereichs des Angriffs der Betätigungseinrichtung führen würden, werden damit wirksam unterdrückt.

Die Betätigungseinrichtung kann einen in den Vorflügel integrierten Aktuator, insbesondere einen in Richtung der Linearführung ausgerichteten oder diese sogar ausbildenden Linearaktuator, aufweisen. Der Aktuator kann ein hydraulischer oder insbesondere ein pneumatischer Aktuator sein. Er kann auch einen elektrisch-mechanischen Wandler aufweisen. Bei der Ausbildung des Aktuators ist dessen Dynamik auf die maximale Frequenz abzustimmen, mit der die Hinterkante des erfindungsgemäßen Vorflügels verstellt werden soll.

Statt einer an der flexiblen Außenhaut angreifenden und diese gegenüber dem formstabilen Vorderkörper beaufschlagenden Betätigungseinrichtung kann auch ein in die biegsame Außenhaut integrierter Aktuator, insbesondere ein Piezo- oder CNT-Aktuator, vorgesehen sein. Hiermit sind auch sehr hochfrequente Verformungen des erfindungsgemäßen Vorflügels realisierbar.

Grundsätzlich kann die biegsame Außenhaut im Bereich der Hinterkante längs der Haupterstreckungsrichtung des Vorflügels versteift sein. In ihrer Biegsamkeit zwischen den Anbindungspunkten an den formstabilen Vorderkörper und der Hinterkante ist die Biegsamkeit jedoch bis auf die Linearführung des Angriffspunkts der Betätigungseinrichtung typischerweise nicht eingeschränkt. Insbesondere sind die die Oberseite und die Unterseite des Vorflügels ausbildenden Teile der elastischen Außenhaut nicht aneinander abgestützt, d. h. insbesondere nicht gegeneinander verstrebt.

Konkret kann die biegsame Außenhaut bei dem neuen Vorflügel aus einem Faserverbundwerkstoff ausgebildet sein. Der ganze Hinterkörper des Vorflügels kann dabei ein zusammenhängendes Bauteil aus dem Faserverbundwerkstoff sein. Wenn der Faserverbundwerkstoff ein Glasfaser-Kunststoff-Verbundwerkstoff ist, weist er eine ausreichende Biegeelastizität und eine günstigerweise sehr hohe Zug- und Drucksteifigkeit auf.

Bei dem neuen Vorflügel kann der Übergang zwischen dem formstabilen Vorderkörper und dem Hinterkörper mit der biegsamen Außenhaut an der Unterseite des Vorflügels dort liegen, wo die konkave Wölbung beginnt. Das heißt, der die konkave Wölbung umfassende Hinterkörper endet zu dem Vorderkörper hin mit der konkaven Wölbung der flexiblen Außenhaut.

An der Oberseite des Vorflügels gibt es keinen derart prominenten Punkt für den Übergang zwischen dem formstabilen Vorderkörper und dem um die Haupterstreckungsrichtung des Vorflügels biegsamen Hinterkörper. Wichtig ist dort jedoch, dass die biegsame Außenhaut stetig an die Fläche des Vorderkörpers anschließt.

Der neue Vorflügel wird an dem zugehörigen Flügel vorzugsweise über gegenüber dem Flügel ausfahrbare Befestigungselemente abgestützt. Diese Befestigungselemente können sich durch mit Dichtungen versehene Durchbrechungen in der biegsamen Außenhaut hindurch erstrecken, so dass die Befestigungselemente die gezielte Verformung des Hinterkörpers des Vorflügels nicht behindern. Typischerweise finden sich diese Durchbrechungen im Bereich der konkaven Wölbung der flexiblen Außenhaut an der Unterseite des Vorflügels.

Ein erfindungsgemäßes Flugzeug mit einem Paar von symmetrisch zu seiner Längsmittelebene ausgebildeten Tragflügeln weist erfindungsgemäß an jedem seiner Tragflügel mindestens einen erfindungsgemäßen Vorflügel auf.

Sowohl bei einem Tragflügel als auch einem Rotorblatt, ebenso wie an jedem anderen Flügel, können auch mehrere in der Haupterstreckungsrichtung des Flügels nebeneinander liegende Vorflügel vorgesehen sein und nicht nur synchron sondern auch unabhängig voneinander angesteuert, d.h. zum Verschwenken ihrer Hinterkante gezielt verformt werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von allen erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den abhängigen Patentansprüchen aufgeführte Merkmale für weitere Ausführungsformen der Erfindung entfallen.

### KURZBESCHREIBUNG DER FIGUREN

Im Folgenden wird die Erfindung anhand eines Ausführungsbeispiels unter Bezugnahme auf die beigefügten Zeichnungen näher erläutert und beschrieben.
- **Fig. 1**: zeigt einen Querschnitt durch den erfindungsgemäßen Vorflügel; und
- **Fig. 2**: zeigt das Schwenken der Hinterkante des erfindungsgemäßen Vorflügels an die Vorderkante eines zugeordneten Flügels, um einen Spalt dazwischen zu schließen.

### FIGURENBESCHREIBUNG

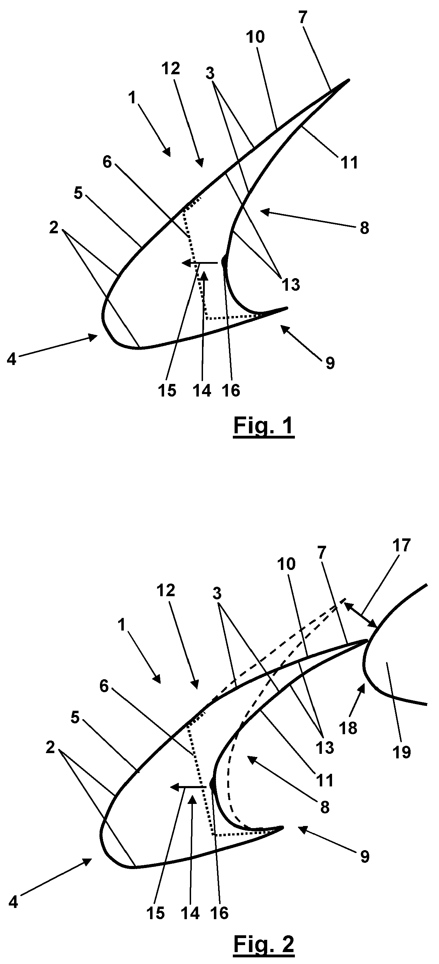

Der in Fig. 1 in einem Querschnitt quer zu seiner Haupterstreckungsrichtung gezeigte Vorflügel 1 weist einen formstabilen Vorderkörper 2 und einen verformbaren Hinterkörper 3 auf. Der Vorderkörper 2 bildet eine Profilnase 4 des Vorflügels 1 aus und umfasst neben einer formsteifen Außenhaut 5 eine formsteife innere Struktur 6. Spaltfrei an den Vorderkörper 2 schließt der Hinterkörper 3 an, der eine Hinterkante 7 und eine konkave Wölbung 8 an der Unterseite 9 des Vorflügels 1 umfasst. Der Vorflügel 1 weist eine biegsame Außenhaut 10, 11 auf, deren einer Abschnitt 10 an der Oberseite 12 des Vorflügels 1 nahtlos und stetig an den Vorderkörper 2 im Bereich der Struktur 6 anschließt und sich bis zu der Hinterkante 7 erstreckt, während ihr anderer Abschnitt 11 an der Unterseite 9 von der Hinterkante 7 unter Ausbildung der Wölbung 8 bis zu der Struktur 6 verläuft. Der Abschnitt 11 endet dort mit der konkaven Wölbung 8 an dem formstabilen Vorderkörper 2. Die biegsame Außenhaut 10, 11 ist insbesondere aus einem Faserverbundwerkstoff 13 mit vornehmlichem Verlauf der Verstärkungsfasern parallel zu der Zeichenebene gemäß Fig. 1 ausgebildet. Die Außenhaut 10, 11 ist um die Haupterstreckungsrichtung des Vorflügels 1, die senkrecht zu der Zeichenebene gemäß Fig. 1 verläuft, biegsam. Eine Betätigungseinrichtung 14, die durch einen Pfeil 15 angedeutet ist und sich an der Struktur 6 abstützt, greift in einem Angriffsbereich 16 an dem Abschnitt 11 der Außenhaut im Bereich der Wölbung 8 an, um eine gezielte Verformung des Hinterkörpers 3 zwecks Verschwenkens der Hinterkante 7 einzuleiten. Durch die Betätigungseinrichtung 14 oder eine separate Linearführung ist der Angriffsbereich 16 gegenüber dem formstabilen Vorderkörper 2 in der durch den Pfeil 15 eingezeichneten Richtung linear geführt. Hierdurch werden beliebige Deformationen des Hinterkörpers 3 des Vorflügels 1 auch unter Einwirkung aerodynamischer Lasten verhindert. Die Betätigungseinrichtung 14 kann den Angriffsbereich 16 grundsätzlich auch entgegen der Richtung des Pfeils 15 verschieben. Eine Rückformung des verformbaren Hinterkörpers 3 kann aber auch durch elastische Rückstellkräfte und zu erwartende aerodynamische Lasten erfolgen, sobald der Angriff der Betätigungseinrichtung 14 an dem Angriffsbereich 16 zurückgenommen wird.

Fig. 2 zeigt die durch die Betätigungseinrichtung 14 einleitbare Verformung des Hinterkörpers 3, durch die die Hinterkante 7 zum Verschließen eines Spalts 17 gegenüber einer Vorderkante 18 eines Flügels 19 verschwenkt wird, bis sie an der Vorderkante 18 anliegt. Bei dieser Verformung werden die Abschnitte 10 und 11 der Außenhaut ausschließlich auf Biegung beansprucht. Der gesamte Vorflügel 1 weist weder im Bereich des Vorderkörpers 2 noch im Bereich des Hinterkörpers 3 noch an den Übergängen zwischen dem Vorderkörper 2 und dem Hinterkörper 3 irgendwelche strukturellen Schwachstellen auf. Im Falle eines Ausfalls der Betätigungseinrichtung 14 öffnet sich der Spalt 17 wieder. Hiermit mag sich zwar der Strömungswiderstand des Flügels 19 mit dem Vorflügel 1 erhöhen und auch eine erhöhte Lärmemission verbunden sein. Bei Verwendung des Flügels 19 als Tragflügel für ein Flugzeug resultiert hierdurch jedoch kein Sicherheitsrisiko. Ganz im Gegenteil erhöht sich der Auftrieb des Tragflügels mit dem Vorflügel 1 durch Öffnung des Spalts 17. Dieser Effekt kann auch durch eine gezielte schnelle Abschaltung der Betätigungseinrichtung 14 genutzt werden, um ein mit dem Tragflügel versehenes Flugzeug abzufangen. Fig. 2 zeigt auch, dass die konkave Wölbung 8 an die konvexe Wölbung der Vorderkante 18 des Flügels 19 angepasst ist, so dass der Flügel 19 im eingefahrenen Zustand des Vorflügels 1 über die gesamte Profildicke an den Vorflügel 1 anschließt.

### BEZUGSZEICHENLISTE

- 1: Vorflügel
- 2: Vorderkörper
- 3: Hinterkörper
- 4: Profilnase
- 5: Außenhaut
- 6: Struktur
- 7: Hinterkante
- 8: konkave Wölbung
- 9: Unterseite
- 10: Abschnitt der biegsamen Außenhaut
- 11: Abschnitt der biegsamen Außenhaut
- 12: Oberseite
- 13: Faserverbundwerkstoff
- 14: Betätigungseinrichtung
- 15: Pfeil
- 16: Angriffsbereich
- 17: Spalt
- 18: Vorderkante
- 19: Flügel

## Patentansprüche

1. Vorflügel (1) zur ausfahrbaren Lagerung an einer Vorderkante (18) eines Flügels (19), mit einem eine Profilnase (4) ausbildenden formstabilen Vorderkörper (2) und einem spaltfrei an den Vorderkörper (2) anschließenden Hinterkörper (3), der eine an die Vorderkante (18) des Flügels (19) angepasste konkave Wölbung (8) an der Unterseite (9) des Vorflügels (1) und eine Hinterkante (7) des Vorflügels (1) umfasst und der um eine Haupterstreckungsrichtung des Vorflügels (1) verformbar ist, um die Hinterkante (7) ohne Öffnung eines Spalts in dem Vorflügel (1) um die Haupterstreckungsrichtung des Vorflügels (1) gegenüber dem Vorderkörper (2) abzuwinkeln, **dadurch gekennzeichnet,** das s der Hinterkörper (3) eine um die Haupterstreckungsrichtung des Vorflügels (1) biegsame Außenhaut (10, 11) aufweist, die an den Vorderkörper (2) anschließt und sich von dort auf der Oberseite (12) und der Unterseite (9) des Vorflügels (1) bis zu der Hinterkante (7) erstreckt, wobei sie auf der Unterseite (9) des Vorflügels (1) die konkave Wölbung (8) aufweist.

2. Vorflügel (1) nach Anspruch 1, **dadurch gekennzeichnet, dass** eine Betätigungseinrichtung (14) zum Abwinkeln der Hinterkante (7) im Bereich der konkaven Wölbung (8) an der Außenhaut (11) angreift und diese gegenüber dem Vorderkörper (2) beaufschlagt.

3. Vorflügel (1) nach Anspruch 2, **dadurch gekennzeichnet, dass** die Betätigungseinrichtung (14) die Außenhaut (11) gegen eine elastische Rückstellkraft zu dem Vorderkörper (2) hin beaufschlagt.

4. Vorflügel (1) nach Anspruch 3, **dadurch gekennzeichnet, dass** die elastische Rückstellkraft von einer Biegeelastizität der Außenhaut (10, 11) bereitgestellt wird.

5. Vorflügel (1) nach einem der Ansprüche 2 bis 4, **dadurch gekennzeichnet, dass** die Außenhaut (11) im Angriffsbereich (16) der Betätigungseinrichtung (14) längs der Haupterstreckungsrichtung des Vorflügels (1) versteift ist.

6. Vorflügel (1) nach einem der Ansprüche 2 bis 5, **dadurch gekennzeichnet, dass** eine Linearführung gegenüber dem Vorderkörper (2) für den Angriffsbereich (16) der Betätigungseinrichtung (14) an der biegsamen Außenhaut (11) vorgesehen ist.

7. Vorflügel (1) nach einem der Ansprüche 2 bis 6, **dadurch gekennzeichnet, dass** die Betätigungseinrichtung (14) einen in den Vorflügel (1) integrierten Aktuator, insbesondere einen Linearaktuator aufweist.

8. Vorflügel (1) nach Anspruch 1, **dadurch gekennzeichnet, dass** ein in die biegsame Außenhaut (11) integrierter Aktuator, insbesondere ein Piezo- oder CNT-Aktuator, vorgesehen ist.

9. Vorflügel (1) nach einem der vorhergehenden Ansprüche, **dadurch gekennzeichnet, dass** die Außenhaut (10, 11) im Bereich der Hinterkante (7) längs der Haupterstreckungsrichtung des Vorflügels (1) versteift ist.

10. Vorflügel (1) nach einem der vorhergehenden Ansprüche, **dadurch gekennzeichnet, dass** die durch die biegsame Außenhaut (10, 11) gebildeten Teile der Oberseite (12) und der Unterseite (9) des Vorflügels (1) außer durch den Vorderkörper (2) und außer im Bereich der Hinterkante (7) nicht aneinander abgestützt sind.

11. Vorflügel (1) nach einem der vorhergehenden Ansprüche, **dadurch gekennzeichnet, dass** die biegsame Außenhaut (10, 11) aus einem Faserverbundwerkstoff (13) ausgebildet ist, wobei der Hinterkörper (3) optional ein zusammenhängendes Bauteil aus dem Faserverbundwerkstoff (13) ist und/oder wobei der Faserverbundwerkstoff (13) optional ein Glasfaser-Kunststoff-Verbundwerkstoff ist.

12. Vorflügel (1) nach einem der vorhergehenden Ansprüche, **dadurch gekennzeichnet, dass** die biegsame Außenhaut (10, 11) an der Unterseite (9) des Vorflügels (1) dort an den Vorderkörper (2) anschließt, wo die konkave Wölbung (8) beginnt und/oder dass die biegsame Außenhaut (10) an der Oberseite (12) des Vorflügels (1) stetig an den Vorderkörper (2) anschließt.

13. Vorflügel (1) nach einem der vorhergehenden Ansprüche, **dadurch gekennzeichnet, dass** die biegsame Außenhaut (11) mit Dichtungen versehene Durchbrechungen für die Durchführung von Befestigungselementen von dem Flügel (19) zu dem Vorderkörper (2) aufweist.

14. Tragflügel für ein Flugzeug mit mindestens einem ausfahrbaren Vorflügel (1) nach einem der vorhergehenden Ansprüche.

15. Flugzeug mit einem Paar von Tragflügeln nach Anspruch 14.

## Claims

1. Slat (1) for extendable mounting to a leading edge (18) of a wing (19), comprising a dimensionally stable front part (2) forming a profile nose (4) and a back part (3) connecting to the front part (2) without a slot being formed in between, which includes a concave curvature (8) adapted to the leading edge (18) of the wing (19) at the underside (8) of the slat (1) and a trailing edge (7) of the slat (1), and which is deformable about a direction of main extension of the slat (1) to bend the trailing edge (7) with regard to the front part (2) about the direction of main extension of the slat (1) without opening a slot in the slat (1), **characterised in that** the back part (3) has a skin (10, 11) bendable about the direction of main extension of the slat (1), which connects to the front part (2) and which extends from there up to the trailing edge (7) on the upper side (12) and the underside (9) of the slat (1), wherein the skin (10, 11) comprises the concave curvature (8) at the underside (9) of the slat (1).

2. Slat (1) of claim 1, **characterised in that** an operating device (14) for bending the trailing edge (7) engages the skin (11) in the area of the concave curvature (8) and acts upon the skin (11) with regard to the front part (2).

3. Slat (1) of claim 2, **characterised in that** the operation device (14), against an elastic restoring force, acts upon the skin (11) towards the front part (2).

4. Slat (1) of claim 3, **characterised in that** the elastic restoring force is provided by a bending elasticity of the skin (10, 11).

5. Slat (1) of any of the claims 2 to 4, **characterised in that** the skin (11) in the area (16) of engagement of the operation device (14) is stiffened along the direction of main extension of the slat (1).

6. Slat (1) of any of the claims 2 to 5, **characterised in that** a linear guiding with regard to the front part (2) is provided for the area (16) of engagement of the operation device (14) at the bendable skin (11).

7. Slat (1) of any of the claims 2 to 6, **characterised in that** the operation device (14) comprises an actuator integrated into the slat (1), particularly a linear actuator.

8. Slat (1) of claim 1, **characterised in that** an actuator integrated into the bendable skin (11) is provided, particularly a piezo or CNT actuator.

9. Slat (1) of any of the preceding claims, **characterised in that** the skin (10, 11), in the area of the trailing edge (7), is stiffened along the direction of main extension of the slat (1).

10. Slat (1) of any of the preceding claims, **characterised in that** those components formed by the bendable skin (10, 11) at the upper side (12) and the lower side (9) of the slat (1) are not supported at each other besides via the front part (2) and in the area of the trailing edge (7).

11. Slat (1) of any of the preceding claims, **characterised in that** the bendable skin (10, 11) is made of a fibre composite material (13), wherein, optionally, the back part (3) is an integrated component made of the fibre composite material (13) and/or wherein, optionally, the fibre composite material (13) is a glass fibre-plastic-composite material.

12. Slat (1) of any of the preceding claims, **characterised in that** the bendable skin (10, 11), at the underside (9) of the slat (1), connects there to the front part (2) where the concave curvature (8) starts and/or that the bendable skin (10), at the upper side (12) of the slat (1), continuously connects to the front part (2).

13. Slat (1) of any of the preceding claims, **characterised in that** the bendable skin (11) comprises openings provided with seals for feeding through mounting elements from the wing (19) to the front part (2).

14. Wing for an airplane with at least one extendable slat (1) of any of the preceding claims.

15. Airplane comprising a pair of wings of claim 14.

## Revendications

1. Bec de bord d'attaque (1) pour le logement, avec possibilité de sortie, au niveau d'un bord avant (18) d'une aile (19), avec un élément avant (2) rigide formant un embout profilé (4) et un élément arrière (3) raccordé sans interstice à l'élément avant (2), qui comprend une courbure concave (8) adaptées au bord avant (18) de l'aile (19) sur le côté inférieur (9) du bec de bord d'attaque (1) et un bord arrière (7) du bec de bord d'attaque (1) et qui est déformable autour d'une direction principale d'extension du bec de bord d'attaque (1) afin d'incliner le bord arrière (7), sans ouverture d'un interstice dans le bec de bord d'attaque (1) autour de la direction principale d'extension du bec de bord d'attaque (1), par rapport à l'élément avant (2), **caractérisé en ce que** l'élément arrière (3) comprend une enveloppe externe (10, 11) flexible autour de la direction principale d'extension du bec de bord d'attaque (1), qui se raccorde à l'élément avant (2) et s'étend de là sur le côté supérieur (12) et le côté inférieur (9) du bec de bord d'attaque (1) jusqu'au bord arrière (7), cette enveloppe externe présentant, sur le côté inférieur (9) du bec de bord d'attaque (1) la courbure concave (8).

2. Bec de bord d'attaque (1) selon la revendication 1, **caractérisé en ce qu'**un dispositif d'actionnement (14) intervient, pour l'inclinaison du bord arrière (7) au niveau de la courbure concave (8) sur l'enveloppe externe (11) et déplace celle-ci par rapport à l'élément avant (2).

3. Bec de bord d'attaque (1) selon la revendication 2, **caractérisé en ce que** le dispositif d'actionnement (14) déplace l'enveloppe externe (11) contre une force de rappel en direction de l'élément avant (2).

4. Bec de bord d'attaque (1) selon la revendication 3, **caractérisé en ce que** la force de rappel élastique est exercée par une élasticité de flexion de l'enveloppe externe (10, 11).

5. Bec de bord d'attaque (1) selon l'une des revendications 2 à 4, **caractérisé en ce que** l'enveloppe externe (11) est rigidifiée dans la zone d'attaque (16) du dispositif d'actionnement (14) le long de la direction principale d'extension du bec de bord d'attaque (1).

6. Bec de bord d'attaque (1) selon l'une des revendications 2 à 5, **caractérisé en ce qu'**un guidage linéaire par rapport à l'élément avant (2) est prévu pour la zone d'attaque (16) du dispositif d'actionnement (14) sur l'enveloppe externe (11).

7. Bec de bord d'attaque (1) selon l'une des revendications 2 à 6, **caractérisé en ce que** le dispositif d'actionnement (14) comprend un actionneur intégré dans le bec de bord d'attaque (1), plus particulièrement un actionneur linéaire.

8. Bec de bord d'attaque (1) selon la revendication 1, **caractérisé en ce qu'**un actionneur intégré dans l'enveloppe externe flexible (11), plus particulièrement un actionneur piézo-électrique ou un actionneur CNT, est prévu.

9. Bec de bord d'attaque (1) selon l'une des revendications précédentes, **caractérisé en ce que** l'enveloppe externe (10, 11) est rigidifiée au niveau du bord arrière (7) le long de la direction principale d'extension du bec de bord d'attaque (1).

10. Bec de bord d'attaque (1) selon l'une des revendications précédentes, **caractérisé en ce que** les parties du côté supérieur (12) et du côté inférieur (9) du bec de bord d'attaque (1), formées par l'enveloppe externe flexible (10, 11), ne s'appuient pas les unes sur les autres, excepté par l'élément avant (2) et excepté au niveau du bord arrière (7).

11. Bec de bord d'attaque (1) selon l'une des revendications précédentes, **caractérisé en ce que** l'enveloppe externe flexible (10, 11) est constituée d'un matériau composite à fibres (13), l'élément arrière (3) étant, en option, un composant d'un seul tenant constitué du matériau composite à fibres (13) et/ou le matériau composite à fibres (13) est, en option, une matière plastique composite à fibres de verre.

12. Bec de bord d'attaque (1) selon l'une des revendications précédentes, **caractérisé en ce que** l'enveloppe externe flexible (10, 11) se raccorde, au niveau du côté inférieur (9) du bec de bord d'attaque (1), à l'élément avant (2), où la courbure concave (8) commence et/ou **en ce que** l'enveloppe externe flexible (10) se raccorde, au niveau du côté supérieur (12) du bec de bord d'attaque (1), de manière continue à l'élément avant (2).

13. Bec de bord d'attaque (1) selon l'une des revendications précédentes, **caractérisé en ce que** l'enveloppe externe flexible (11) comprend des passages munis de joints d'étanchéité pour le passage d'éléments de fixation de l'aile (19) avec l'élément avant (2).

14. Aile porteuse pour un avion avec au moins un bec de bord d'attaque (1) pouvant être sorti selon l'une des revendications précédentes.

15. Avion avec une paire d'ailes porteuses selon la revendication 14.
